# EUROPÄISCHE PATENTANMELDUNG

(11) **EP 0 764 712 A2**
(43) Veröffentlichungstag der Anmeldung: **26.03.1997**
(21) Anmeldenummer: 96114371.6
(22) Anmeldetag: 09.09.1996
(51) Int. Cl.: C09K 11/02, H05B 33/20

(54) **Elektrolumineszierende Anordnungen**

(30) Priorität: 21.09.1995 DE 19535063
(71) Anmelder: BAYER AG, 51368 Leverkusen (DE)
(72) Erfinder: Jonas, Friedrich, Dr., 52066 Aachen (DE); Wehrmann, Rolf, Dr., 47800 Krefeld (DE); Elschner, Andreas, Dr., 45479 Mülheim (DE); Dujardin, Ralf, Dr., 47877 Willich (DE); Meier, Helmut-Martin, Dr., 40883 Ratingen (DE)

(57) **Zusammenfassung**

Elektrolumineszierende Anordnung, die mindestens 2 Elektroden, der Basiselektrode und der Topelektrode, einer lichtemittierenden Schicht und einen gegen Luft-, Thermooxidation, Ozon und UV-Strahlung wirksamen Stabilisator enthält, wobei die elektrolumineszierende Anordnung mindestens eine weitere Schicht, ausgewählt aus der Reihe der Löcher-injizierenden Schicht, Löcher-transportierenden Schicht und Elektronen-injizierenden Schicht enthalten kann.

## Beschreibung

Eine elektrolumineszierende (EL) Anordnung ist dadurch charakterisiert, daß sie unter Anlegung einer elektrischen Spannung unter Stromfluß Licht aussendet. Derartige Anordnungen sind unter der Bezeichnung "Leuchtdioden" (LEDs = light emitting diodes) seit langem in der Technik bekannt. Die Emission von Licht kommt dadurch zustande, daß positive Ladungen ("Löcher", holes) und negative Ladungen ("Elektronen", electrons) unter Aussendung von Licht rekombinieren.

Bei der Entwicklung lichtemittierender Bauteile für Elektronik oder Photonik kommen heute hauptsächlich anorganische Halbleiter, wie Galliumarsenid, zum Einsatz. Auf Basis derartiger Substanzen können punktförmige Anzeigeelemente hergestellt werden. Großflächige Anordnungen sind nicht möglich.

Neben den Halbleiterleuchtdioden sind elektrolumineszierende Anordnungen auf Basis aufgedampfter niedermolekularer organischer Verbindungen bekannt (US-P 4 539 507, US-P 4 769 262, US-P 5 077 142, EP-A 406 762). Auch mit diesen Materialien können - bedingt durch das Herstellverfahren - nur kleindimensionierte LEDs hergestellt werden. Außerdem besitzen diese elektrolumineszierenden Anordnungen nur sehr geringe Lebensdauern.

Weiterhin werden Polymere, wie Poly-(p-phenylene) und Poly-(p-phenylenvinylene (PPV)) als elektrolumineszierende Polymere beschrieben: G. Leising et al., Adv. Mater. 4 (1992) No. 1; Friend et al., J. Chem. Soc., Chem. Commun. 32 (1992); Saito et al., Polymer, 1990, Vol. 31, 1137; Friend et al., Physical Review B, Vol. 42, No. 18, 11670 oder WO 90/13148. Weitere Beispiele für PPV in Elektrolumineszenzanzeigen werden in EP-A 443 861, WO-A-9203490 und 92003491 beschrieben.

EP-A 0 294 061 stellt einen optischen Modulator auf Basis von Polyacetylen vor.

Zur Herstellung flexibler Polymer-LEDs haben Heeger at al. lösliche konjugierte PPV-Derivate vorgeschlagen (WO 92/16023).

Die organischen EL-Anordnungen enthalten in der Regel eine oder mehrere Schichten aus organischen Ladungstransportverbindungen. Der prinzipielle Aufbau in der Reihenfolge der Schichten ist wie folgt:
1 Träger, Substrat
2 Basiselektrode
3 Löcher-injizierende Schicht
4 Löcher-transportierende Schicht
5 Licht-emittierende Schicht
6 Elektronen-transportierende Schicht
7 Elektronen-injizierende Schicht
8 Topelektrode
9 Kontakte
10 Umhüllung, Verkapselung.

Dieser Aufbau stellt den allgemeinsten Fall dar und kann vereinfacht werden, indem einzelne Schichten weggelassen werden, so daß eine Schicht mehrere Aufgaben übernimmt. Im einfachsten Fall besteht eine EL-Anordung aus zwei Elektroden, zwischen denen sich eine organische Schicht befindet, die alle Funktionen - inklusive der der Emission von Licht - erfüllt. Derartige Systeme sind z.B. in der Anmeldung WO 90/13148 auf der Basis von Poly-(p-phenylenvinylen) beschrieben.

Allen diesen EL-Anordnungen, welche auf niedermolekulare Verbindungen basieren, ist gemeinsam, daß sie keine ausreichende Betriebs-Lebensdauer haben. Während des Betriebs werden die organischen Leuchtdioden sehr heiß (> 100°C), und dies führt zu einer Veränderung (bis hin zur Zerstörung) der Schichten, so daß dann eine Leistungsminderung oder völliger Verlust der Funktion eintritt. Problematisch ist bei diesen LED-Anzeigen auf Basis organischer Materialien die Langzeitstabilität der leuchtenden Schicht.

Es wurde nun gefunden, daß durch Zusatzstoffe die Langzeitstabilität der elektrolumineszierenden Anordnung stark erhöht werden kann.

Gegenstand der Erfindung sind elektrolumineszierende Anordnungen, die mindestens aus 2 Elektroden, der Basiselektrode 2 und der Topelektrode 8, einer lichtemittierenden Schicht 5 und einen gegen Luft-, Thermooxidation, Ozon und UV-Strahlung wirksamen Stabilisator, wobei die elektrolumineszierende Anordnung mindestens eine weitere Schicht, ausgewählt aus der Reihe der Löcher-injizierenden Schicht 3, Löcher-transportierende Schicht 6, Elektronen-injizierenden Schicht 7, enthalten kann.

Die Stabilisatoren können einer oder mehreren der Schichten 3-7 zugesetzt werden. Bevorzugt werden die Stabilisatoren in die lichtemittierende Schicht 5 eingebracht.

Die zugesetzten Stabilisatormengen liegen zwischen 0,1 und 10 Gew.-%, bezogen auf das Gewicht der Schichten zu denen die Stabilisatoren zugesetzt werden. Bevorzugt werden 0,2 bis 3 Gew.-% Stabilisator verwendet.

Die Stabilisatoren werden üblicherweise aus Lösung zusammen mit den übrigen Schichtbestandteilen der Schichten 3-7 aufgebracht. Die Stabilisatoren können auch allein als zusätzliche Zwischenschicht aus Lösung aufgebracht oder als reine Verbindung aufgedampft werden.

Im Falle der UV-Absorber können die Stabilisatoren auch als oberste zusätzliche Schicht auf den Träger bzw. das Substrat 1 aufgebracht werden. Die UV-Absorber werden hierzu in Abmischung mit einem Bindemittel, wie Polystyrol, Polyurethan, Polyvinylacetat, Polyacrylat, Polycarbonat, Polyolefine, Polysulfon, das die Haftung auf 1 ermöglicht, verwendet. Bevorzugt werden die hohen Stabilitäten erzielt, wenn die Stabilisatoren in vernetzenden Systemen wie sie in der EP-A 637 899 beschrieben sind, verwendet werden.

Geeignete Stabilisatoren sind z.B. UV-Stabilisatoren wie sie in Tabelle 1 aufgeführt sind (in Klammern ist jeweils die Verbindungsnummer angegeben):

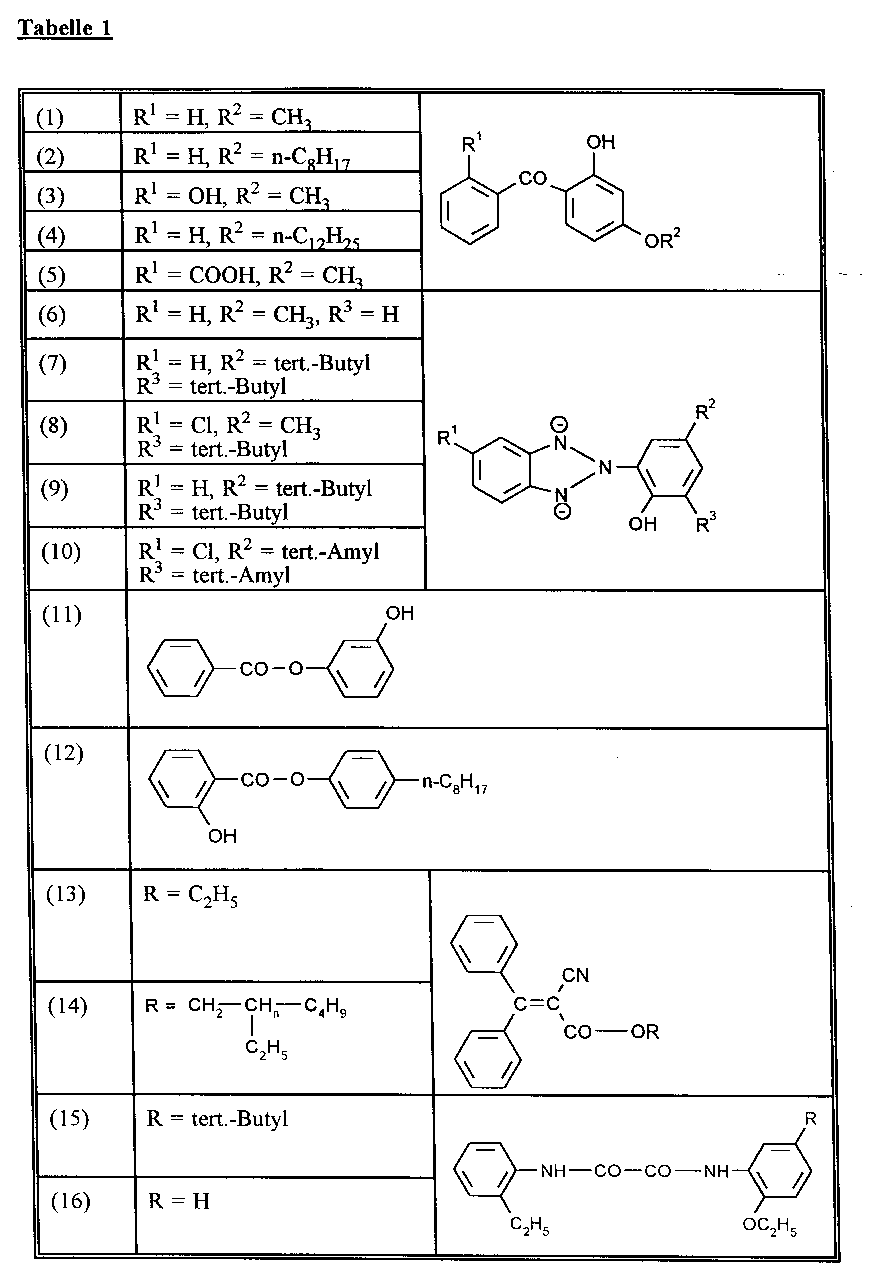

Weiterhin können als Stabilisatoren Antioxidantien und Lichtschutzmittel, z.B. auf Basis von sterisch gehinderten Phenolen, eingesetzt werden; (vgl. Tabelle 2)

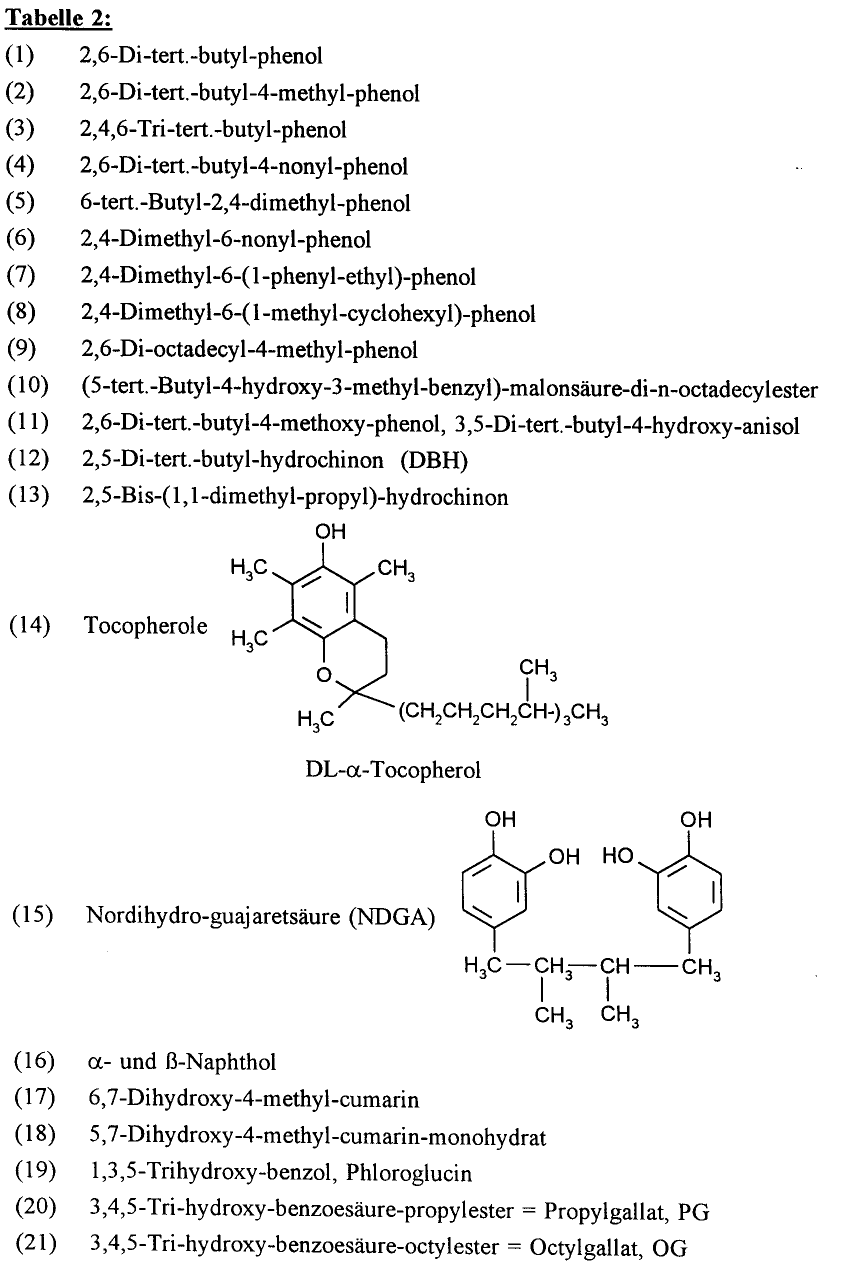

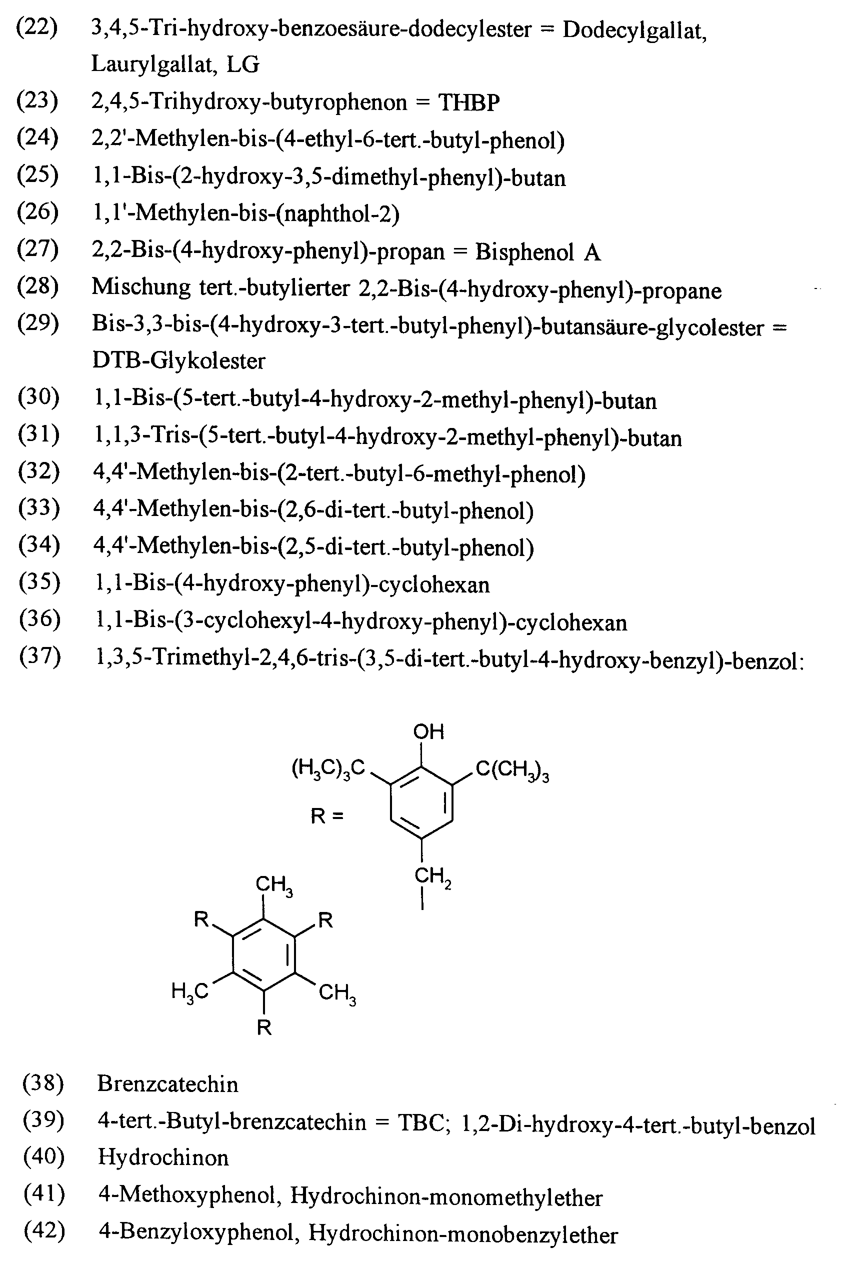

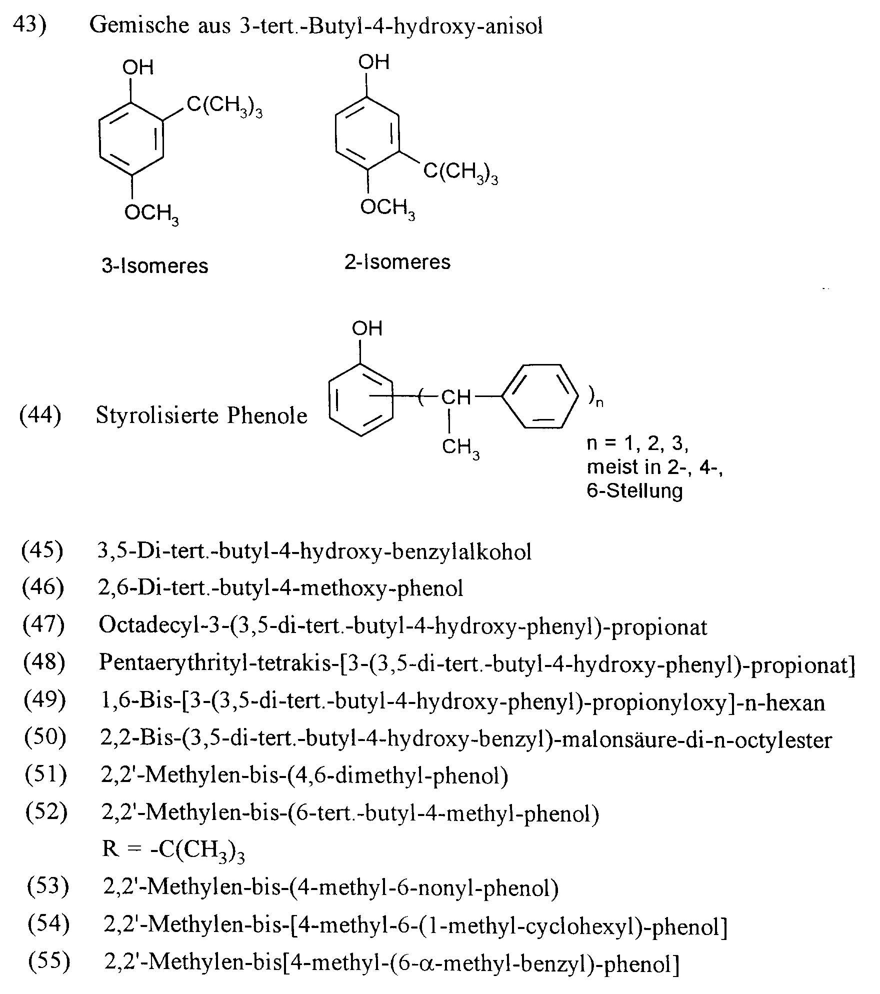

Weiterhin können als Stabilisatoren Ozonschutzmittel, z.B. aus der Benzofuranreihe, der Enoletherreihe, auf Basis von Phenylendiaminen, wie N-Phenyl-1 bzw. 2-Naphthylamin, N,N'-Diisopropyl-p-phenylendiamin, N,N'-Di-sec-butyl-p-phenylendiamin, N,N'-Bis-(1-ethyl-3-methylpentyl)-p-phenylendiamin verwendet werden. Als Beispiele seien in Tabelle 3 genannt:

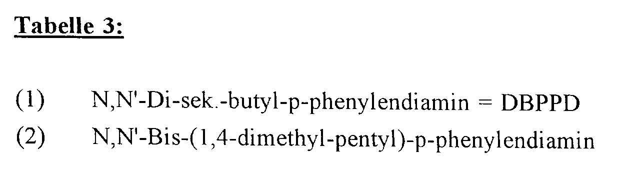

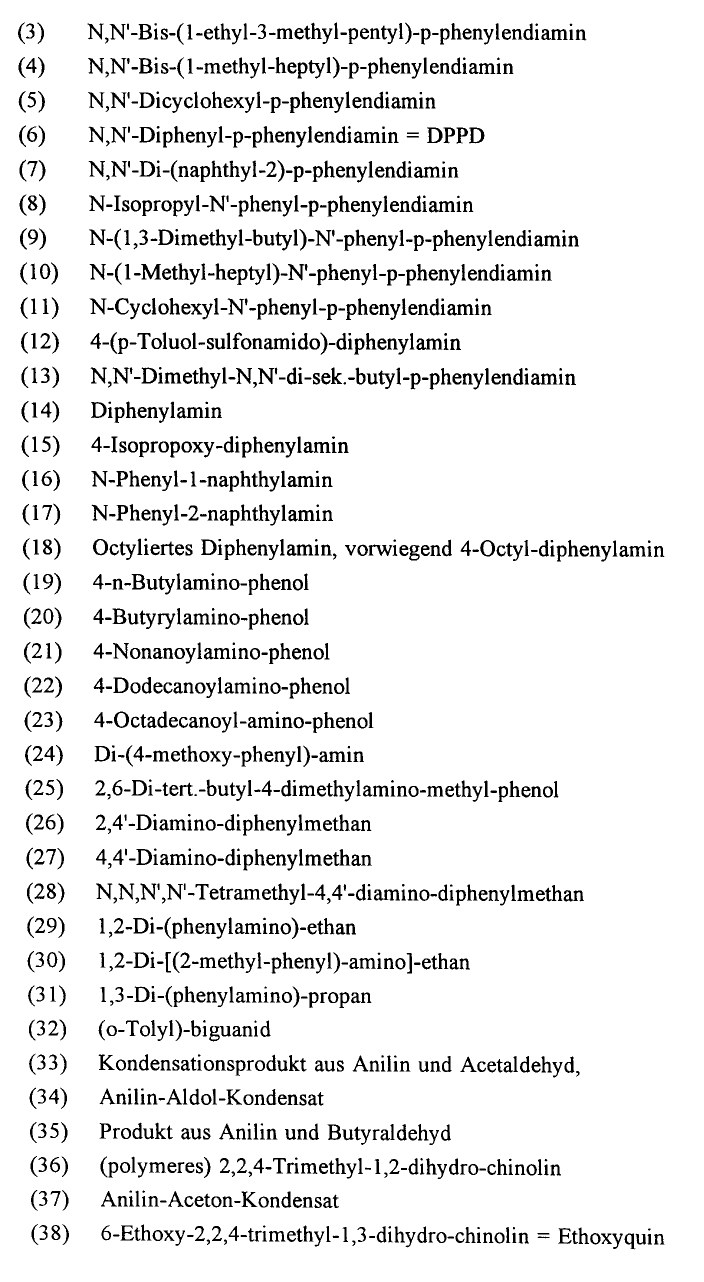

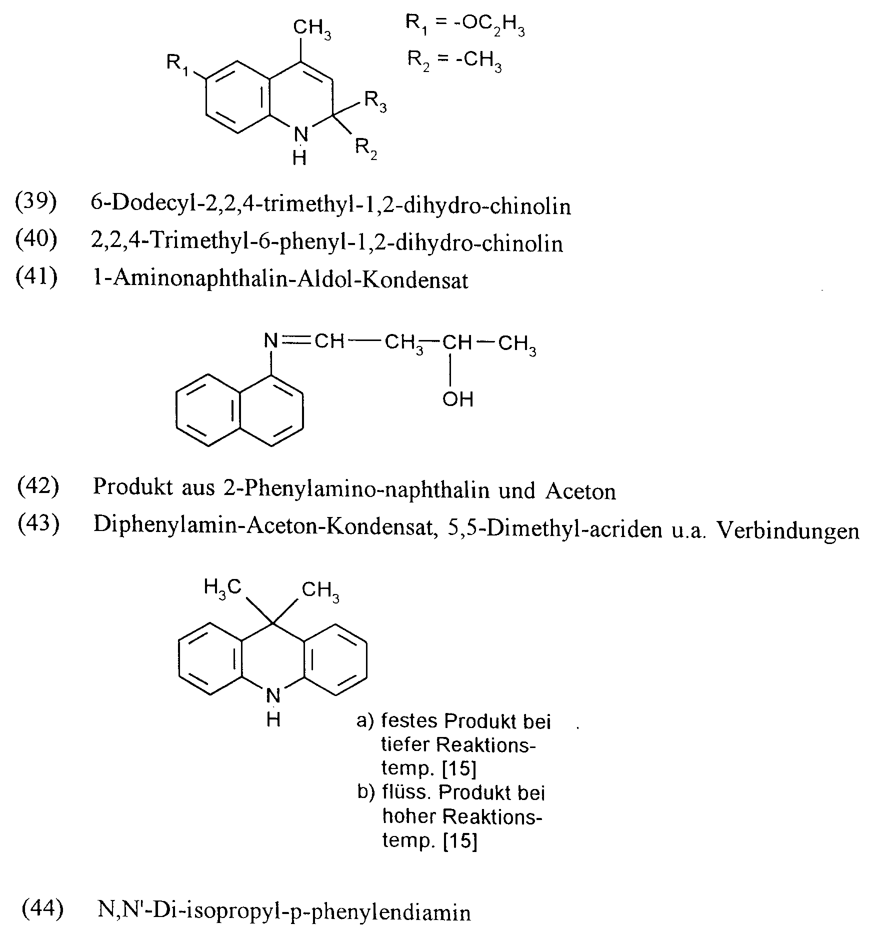

Weiterhin sind Schwefelverbindungen als Stabilisatoren geeignet. Beispielhaft seien in Tabelle 4 genannt:

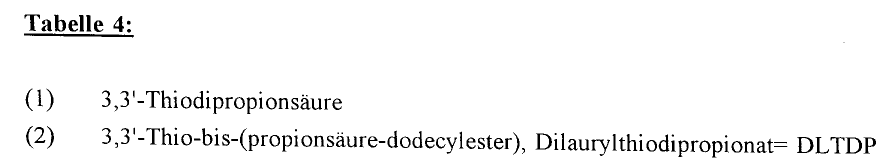

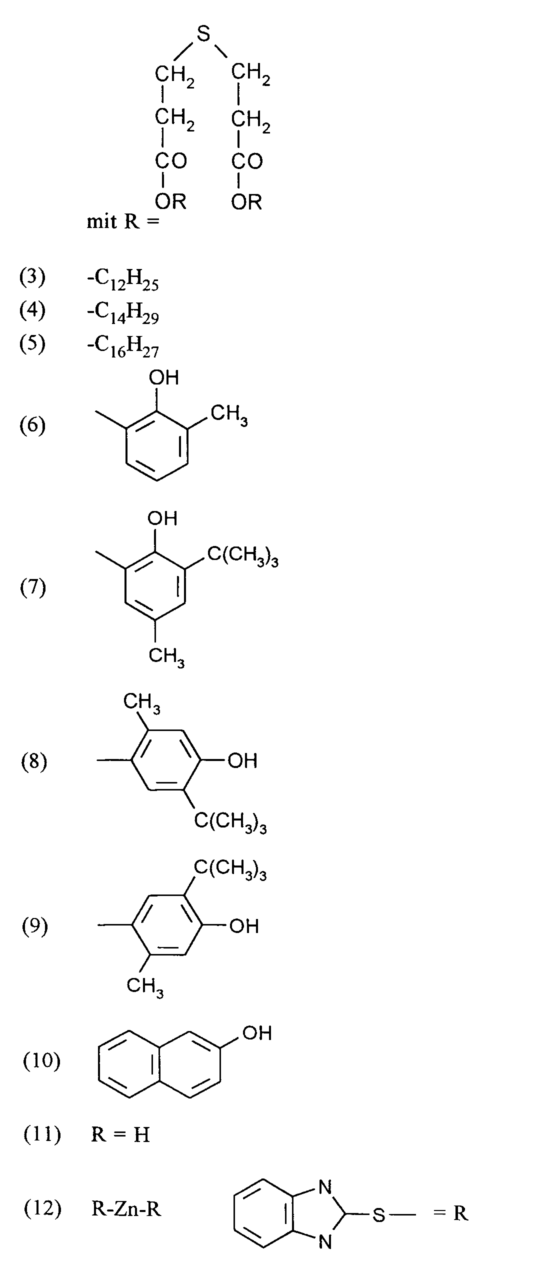

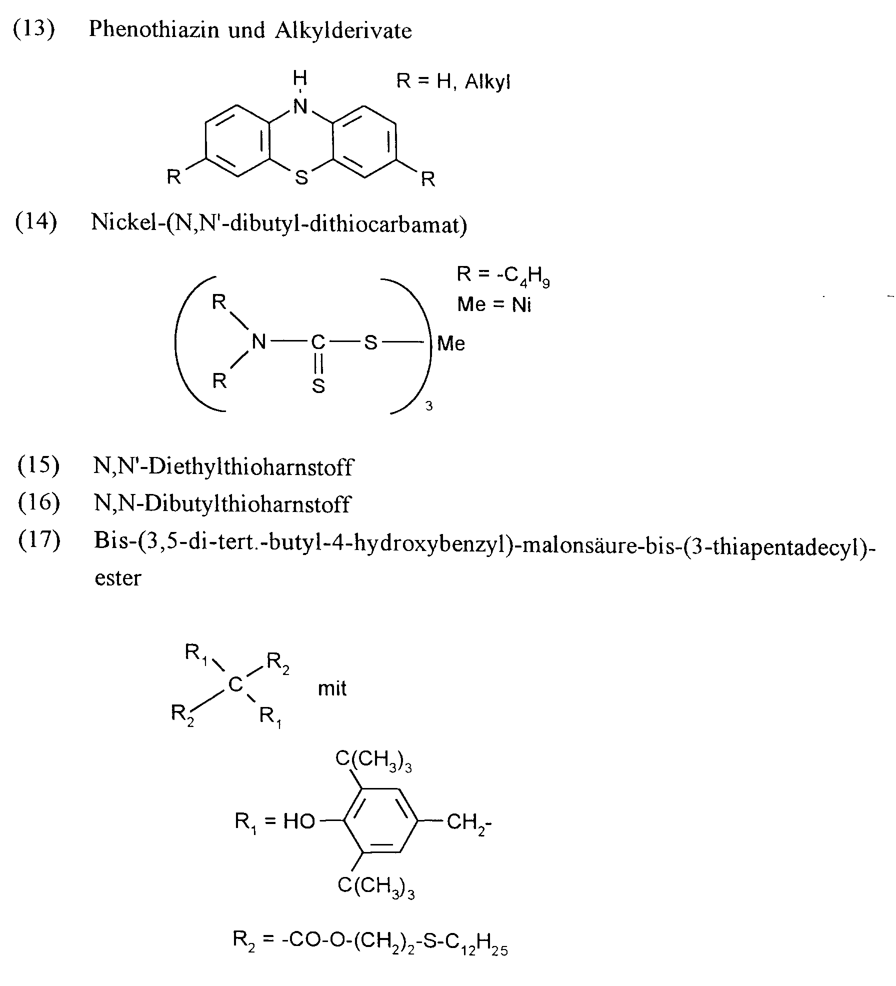

Weiterhin sind Phosphorverbindungen als Stabilisatoren geeignet. Beispielhaft seien in Tabelle 5 genannt:

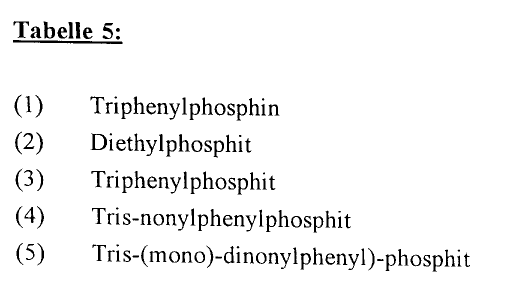

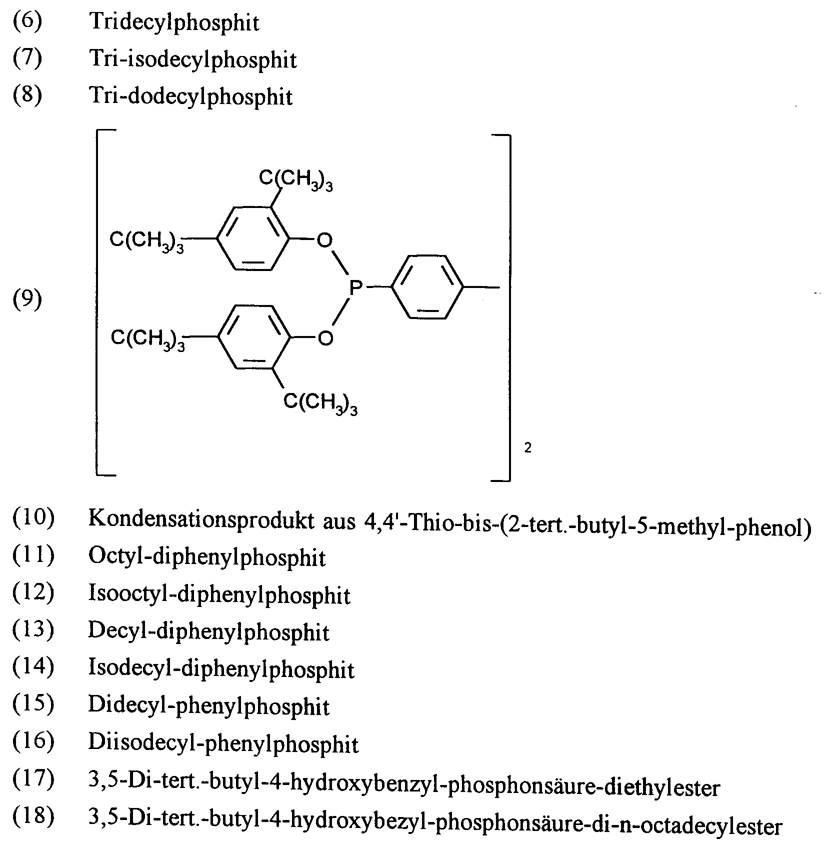

Verschiedene Zink-, Barium- und Calciumthiophosphate sind

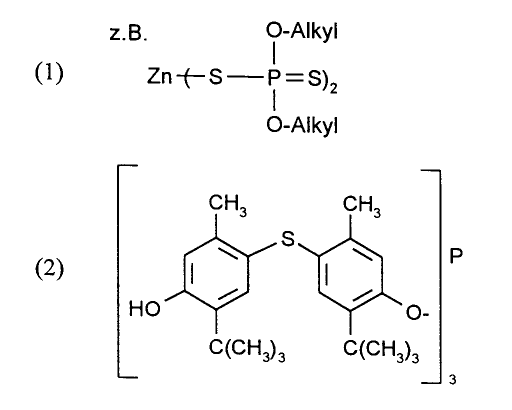

Weitere Stabilisatoren können z.B. Borsäureester und andere organische Bor-Verbindungen sein, wie z.B.

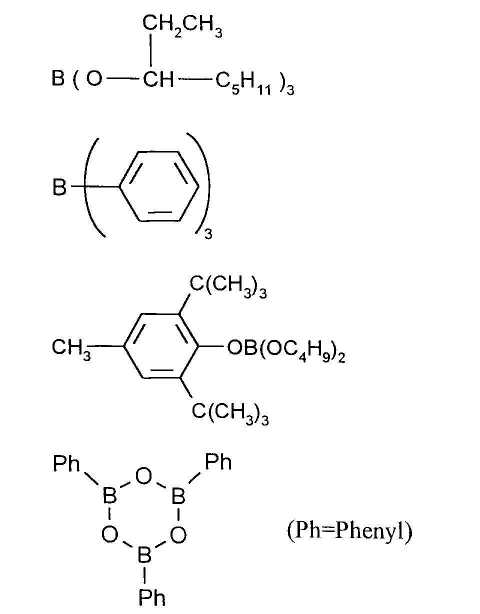

Weiterhin können niedermolekulare Silicium-Verbindungen wie z.B. 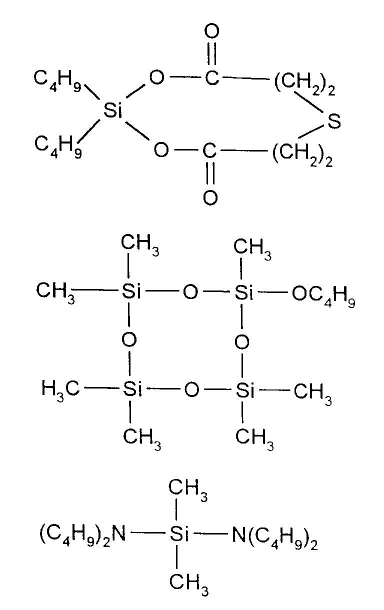 oder Organopolysiloxane wie 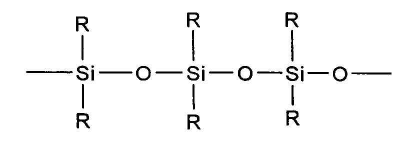 mit R = -CH₃, -Ph, -H oder 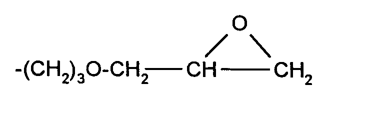 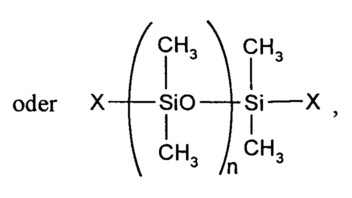 mit
- n =: 1-10 und
- X =: -CH₂O-(CH₂)₃-O(CH₂)₃-OH
-(CH₂)₄-OH
-OC₂H₅
eingesetzt werden.

Weiterhin können sterisch gehinderte Amine, z.B. auf Basis von 2,6-Tetramethylpiperidin-Basis, wie 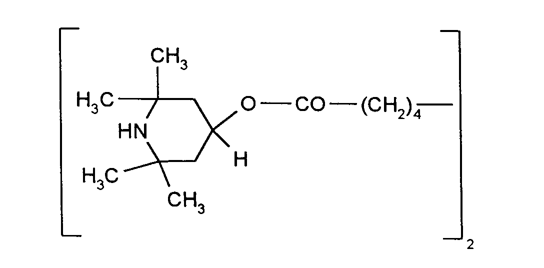 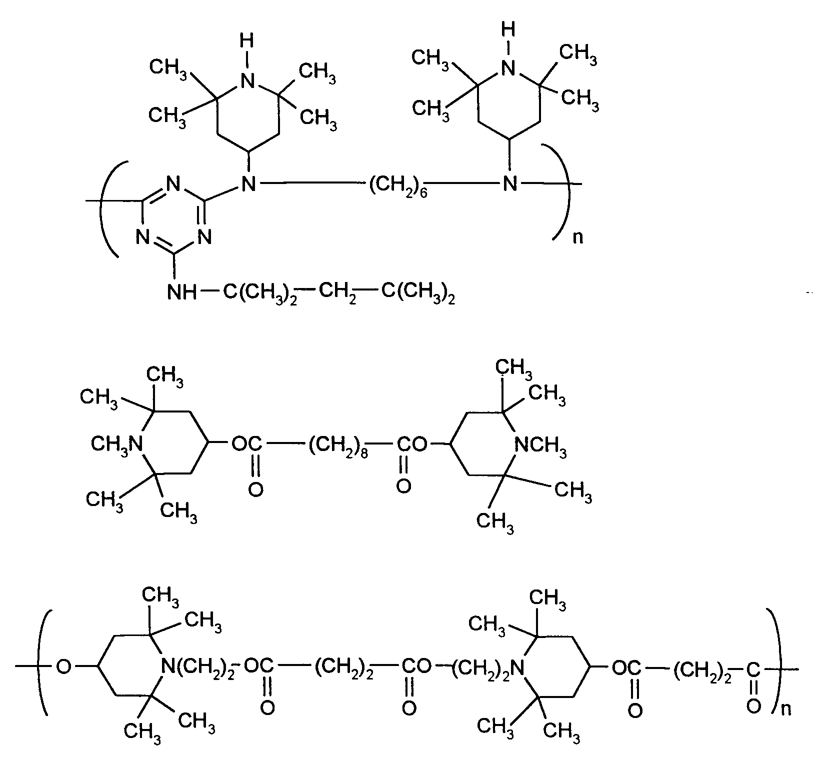 verwendet werden.

Die Stabilisatoren können allein oder als Mischung eingesetzt werden.

Vorzugsweise werden UV Absorber, sterisch gehinderte Phenole, sterisch gehinderte Amine als Stabilisatoren benutzt.

Erfindungsgemäß werden unter Ladungstransportverbindungen alle Verbindungen verstanden, die in irgendeiner Art und Weise Ladungen (Löcher und/oder Elektronen) transportieren. Darunter fallen auch ausdrücklich diejenigen Verbindungen, die Bestandteile der Emitter-Schicht sind, also photolumineszierende Materialien darstellen, wie z.B. Fluoreszenzfarbstoffe.

In der Literatur wird eine Vielzahl von organischen Verbindungen beschrieben, die Ladungen (Löcher und/oder Elektronen) transportieren. Verwendet werden überwiegend niedermolekulare Substanzen, die z.B. im Hochvakuum aufgedampft werden. Meistens handelt es sich um tert. Arylamine oder Oxadiazolgruppenhaltige Verbindungen. Einen guten Überblick über die Substanzklassen und ihre Verwendung geben z.B. die Veröffentlichungen EP-A-387 715, US-P 4 539 507, 4 720 432 und 4 769 292. Im Prinzip kann man z.B. alle Substanzen verwenden, die als Photoleiter aus der Elektrophotographie bekannt sind.

Als transparenter Träger wird z.B. Glas oder Kunststoffmaterial, z.B. eine Folie aus Polyethylenterephthalat, verwendet.

Als Elektrodenmaterial sind beispielsweise geeignet:
a) Metalloxide, z.B. Indium-Zinn-Oxid (ITO), Zinnoxid (NESA), etc.,
b) semi-transparente Metallfilme, z.B. Au, Pt, Ag, Cu etc.,
c) leitfähige Polymerfilme wie Polyaniline, Polythiophene, etc.

Die Metalloxid- und die semitransparenten Metallfilmelektroden werden durch Techniken wie Aufdampfen, Aufsputtern, Platinierung, etc., in dünner Schicht aufgebracht.

Eine der Elektroden ist in der Regel im sichtbaren Spektralbereich transparent.

Die Dicke der transparenten Elektrode beträgt 50 Å bis etwa mehrere µm, vorzugsweise 100 Å bis 5000 Å.

Die elektrolumineszierende Substanz wird direkt auf die transparente Elektrode oder auf eine gegebenenfalls vorhandene ladungstransportierende Schicht als dünner Film aufgebracht. Die Dicke des Films beträgt 30 Å bis 10 µm, vorzugsweise 50 Å bis 1 µm.

Nach dem Trocknen der EL-Schicht wird diese mit einer Gegenelektrode ausgerüstet. Diese besteht aus einer leitfähigen Substanz, die transparent sein kann.

Die erfindungsgemäße Anordnung wird durch zwei elektrische Zuführungen (z.B. Metalldrähte) mit den beiden Elektroden in Kontakt gebracht.

Die Anordnungen emittieren beim Anlegen einer Gleichspannung im Bereich bis 100 Volt Licht der Wellenlänge von 400 bis 700 nm. Sie zeigen im Bereich von 400 bis 700 nm Photolumineszenz.

Die elektrolumineszierende Schicht enthält photolumineszierende Materialien wie sie z.B. in EP-443 861, WO 9203 490 und WO 92 003 491 beschrieben sind. Sie enthält gegebenenfalls weiterhin übliche Zusätze wie inerte Binder, ladungsträgertransportierende Substanzen, Mischungen aus inerten Bindern und ladungsträgertransportierenden Substanzen. Ladungsträgertransportierende Substanzen erhöhen die Elektrolumineszenzintensität und reduzieren die Einsatzspannungen.

Als inerte Binder werden vorzugsweise lösliche transparente Polymere wie z.B. Polycarbonate, Polystyrol und Copolymere des Polystyrols wie SAN, Polysulfone, Polyacrylate, Polyvinylcarbazol, Vinylacetat- und Vinylalkoholpolymere und -copolymere Polyolefine usw. eingesetzt. Diese inerten Binder kommen auch als Bindemittel für die Stabilisatoren infrage.

### Beispiel

Herstellung von elektrolumineszierenden Anordnungen aus Polymeren mit Zusätzen von Additiven zur Erhöhung der Lager- und Betriebsstabilität.

ITO beschichtetes Glas (hergestellt von der Fa. Balzers) wird in 20 x 30 mm² große Substrate geschnitten und gereinigt. Dabei werden folgende Schritte sukzessiv durchgeführt:
1. 15 Minuten mit destilliertem Wasser und Falterol im Ultraschallbad gespült,
2. 2 x 15 Minuten mit jeweils frischem destilliertem Wasser im Ultraschallbad spülen,
3. 15 Minuten mit Ethanol im Ultraschallbad spülen,
3. 2 x 15 Minuten mit jeweils frischem Aceton im Ultraschallbad spülen,
5. Trocknen mit fusselfreien Linsentüchern.

Eine 1 %ige Lösung des Polyethers der Formel A in Dichlorethan wird hergestellt. Bezogen auf die Menge des elektrolumineszierenden Polymers werden 0,5 Gew.-% des Additivs TINUVIN 622LD (Ciba-Geigy) der Lösung zugefügt. Die Lösung wird dann gefiltert (0,2 µm-Filter, Fa. Sartorius). Die gefilterte Lösung wird mit einer Lackschleuder bei 100 U/min auf der ITO-Schicht verteilt. Die Dicke des getrockneten Films beträgt 120 nm. Der Ra-Wert der Oberfläche beträgt 5 nm (Stylusprofilometer Alpha-Step 200 der Fa. Tencor Inst.). Parallel dazu wurde eine Kontrollprobe ohne das Additiv hergestellt. Die so hergestellten polymeren Schichten werden anschließend mit Al-Elektroden bedampft. Dazu werden mit Hilfe einer Lochmaske isolierte Al-Punkte mit einem Durchmesser von 3 mm auf die Polymer-Oberfläche gedampft. Während des Aufdampfens herrscht in der Aufdampfapparatur (Leybold) ein Druck von unter 10⁻⁵ mbar.

### Polyether der Formel A:

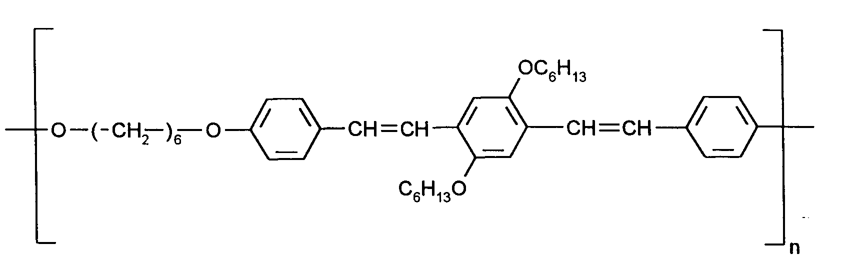

Die ITO-Schicht und die Al-Elektrode wird über elektrische Zuführungen mit einer Spannungsquelle verbunden. Beim Erhöhen der Spannung fließt ein Strom durch die Polymerschicht. Ab einer Spannung von 5 Volt wird Elektrolumineszenz nachweisbar. Die Farbe der Elektrolumineszenz ist blau-grün.

Vergleich der elektrolumineszierenden Anordnungen:

| | |
|---|---|
| Dunkellagerzeit vor Gebrauch: | 14 Tage |
| angelegte Spannung: | 17 Volt. |

### TINUVIN 622LD:

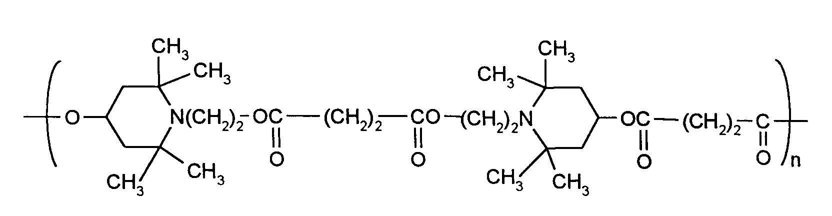

| Device-Aufbau | nach 1000 sec Betrieb | | | nach 2000 sec Betrieb | | |
|---|---|---|---|---|---|---|
| | Strom (mA) | EL-Intensität will. Einh. | Effizienz will. Einh. | Strom (mA) | EL-Intensität will. Einh. | Effizienz will. Einh. |
| ITO/PolyetherA/Al (Kontrollprobe) ohne Stabilisator | 50 | 5.00E-10 | 1E-11 | 50 | 4.00E-10 | 8E-12 |
| ITO/Polyether A + 0,5 % TINUVIN 622LD/Al | 2 | 6.00E-08 | 3E-08 | 2,2 | 8.00E-08 | 4E-08 |
| Al = Aluminium | | | | | | |

## Patentansprüche

1. Elektrolumineszierende Anordnung, die mindestens 2 Elektroden, der Basiselektrode und der Topelektrode, einer lichtemittierenden Schicht und einen gegen Luft-, Thermooxidation, Ozon und UV-Strahlung wirksamen Stabilisator enthält, wobei die elektrolumineszierende Anordnung mindestens eine weitere Schicht, ausgewählt aus der Reihe der Löcher-injizierenden Schicht, Löcher-transportierenden Schicht und Elektronen-injizierenden Schicht enthalten kann.

2. Elektrolumineszierende Anordnung gemäß Anspruch 1, wobei der Stabilisator in die lichtemittierende Schicht eingebracht wird.

3. Elektrolumineszierende Anordnung gemäß Anspruch 1, wobei der Stabilisator in Mengen von 0,1 bis 10 Gew.-%, bezogen auf das Gewicht der Schichten, zu denen der Stabilisator zugesetzt wird, zugegeben wird.

4. Elektrolumineszierende Anordnung gemäß Anspruch 3, wobei der Stabilisator in Mengen von 0,2 bis 3 Gew.-% zugegeben wird.

5. Elektrolumineszierende Anordnung gemäß Anspruch 1, wobei der Stabilisator ausgewählt ist aus der Reihe der UV-Stabilisatoren, Antioxidantien und Lichtschutzmittel, Ozonschutzmittel, Schwefelverbindungen, Phosphorverbindungen, Zink-, Barium- und Calciumthiophosphate, Borsäureester, niedermolekulare Silicium-Verbindungen, Organopolysiloxane und sterisch gehinderte Amine.

6. Elektroluminszierende Anordnung gemäß Anspruch 5, wobei die folgenden Stabilisatoren eingesetzt werden: 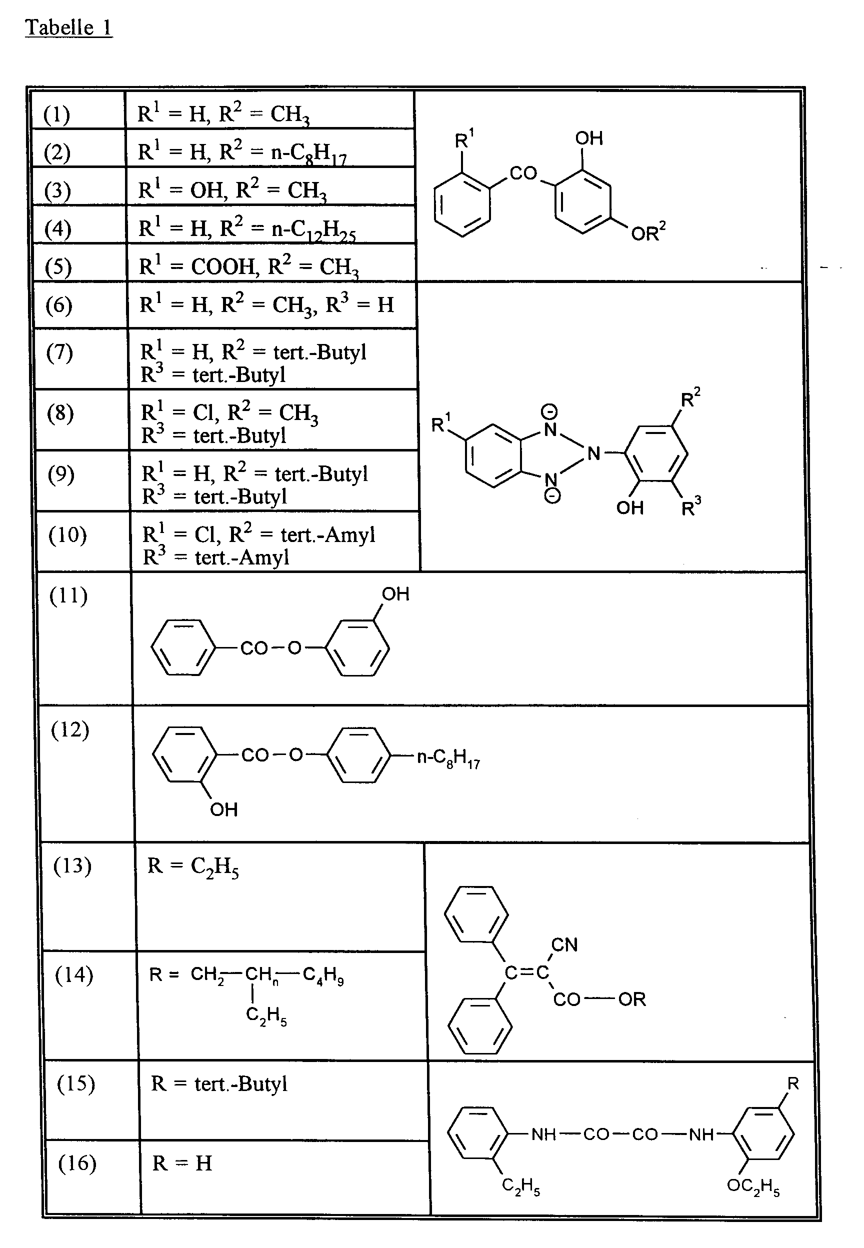 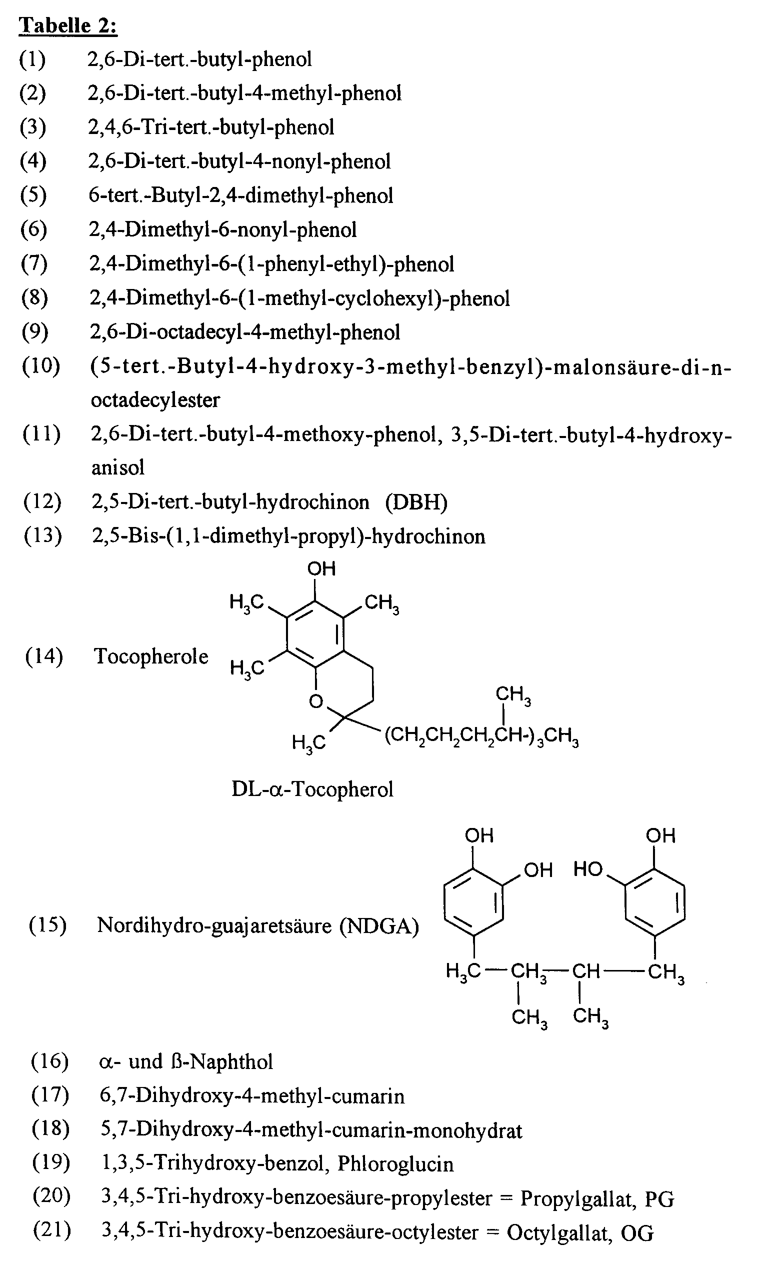 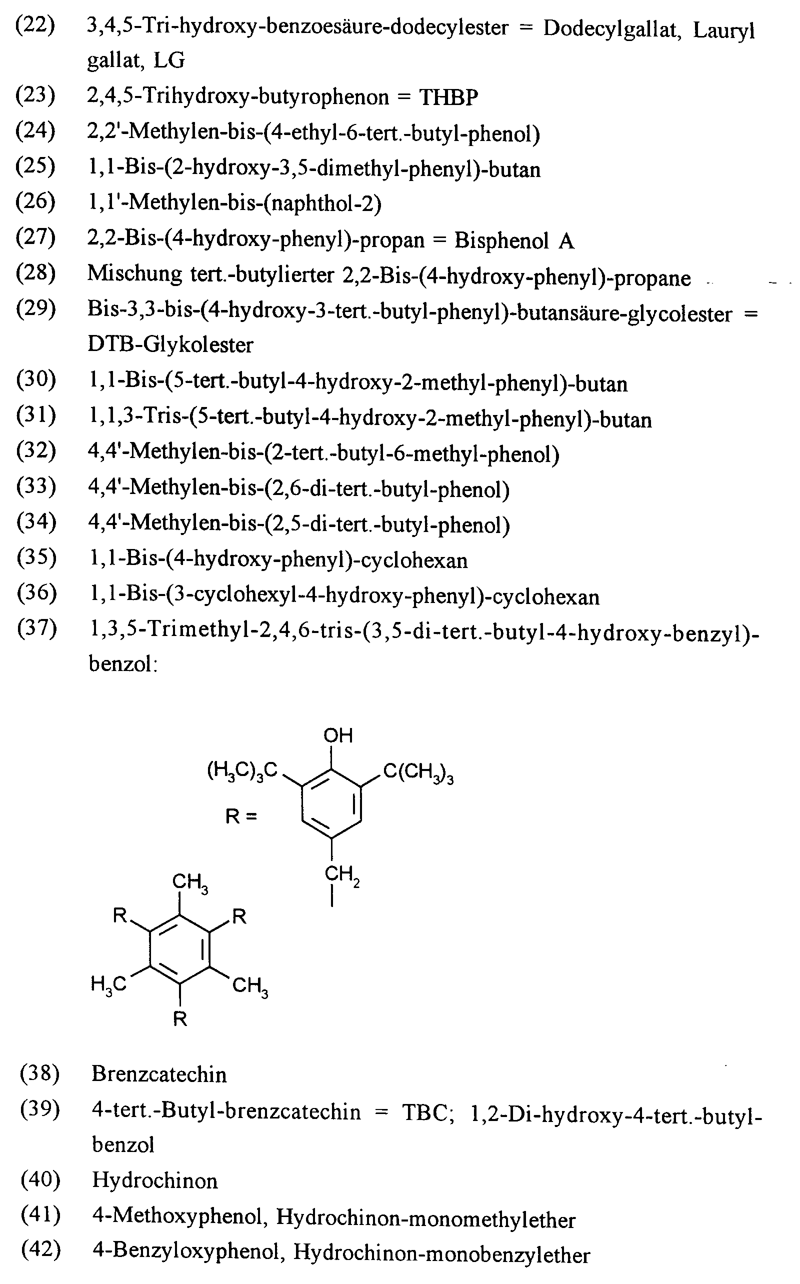 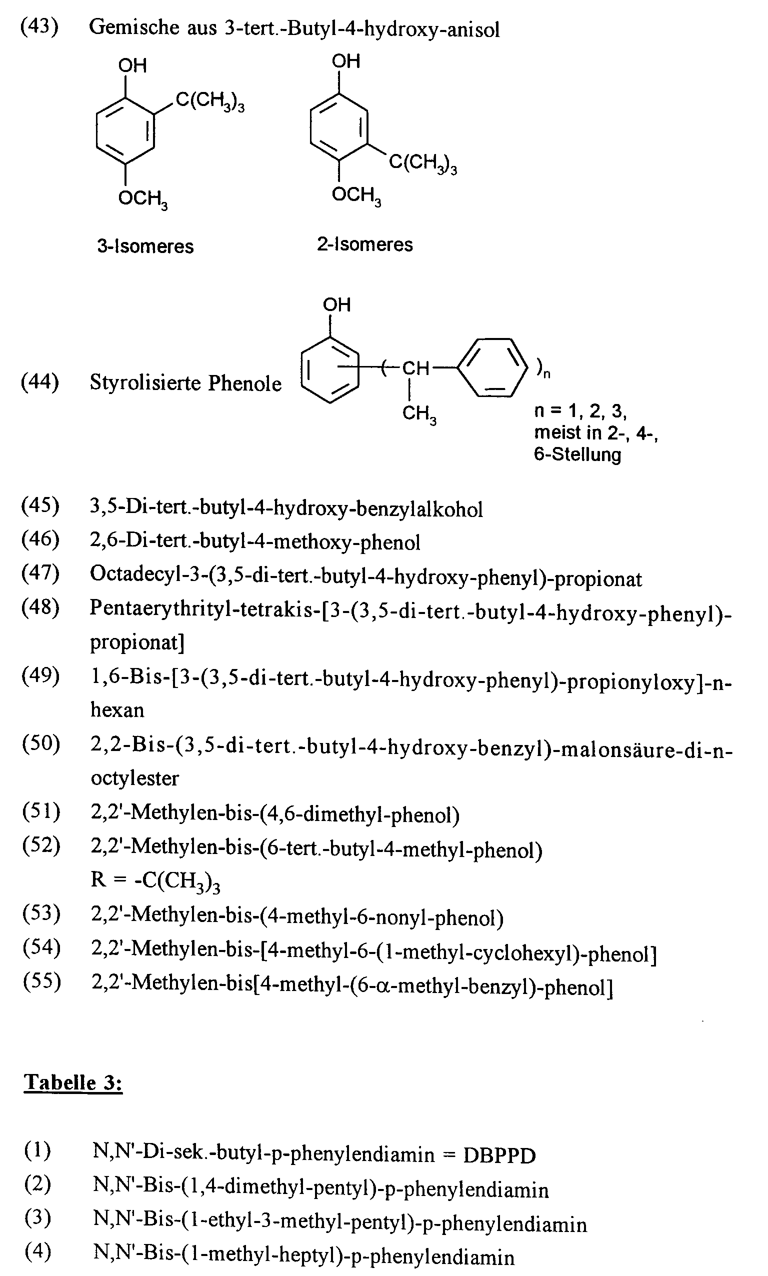 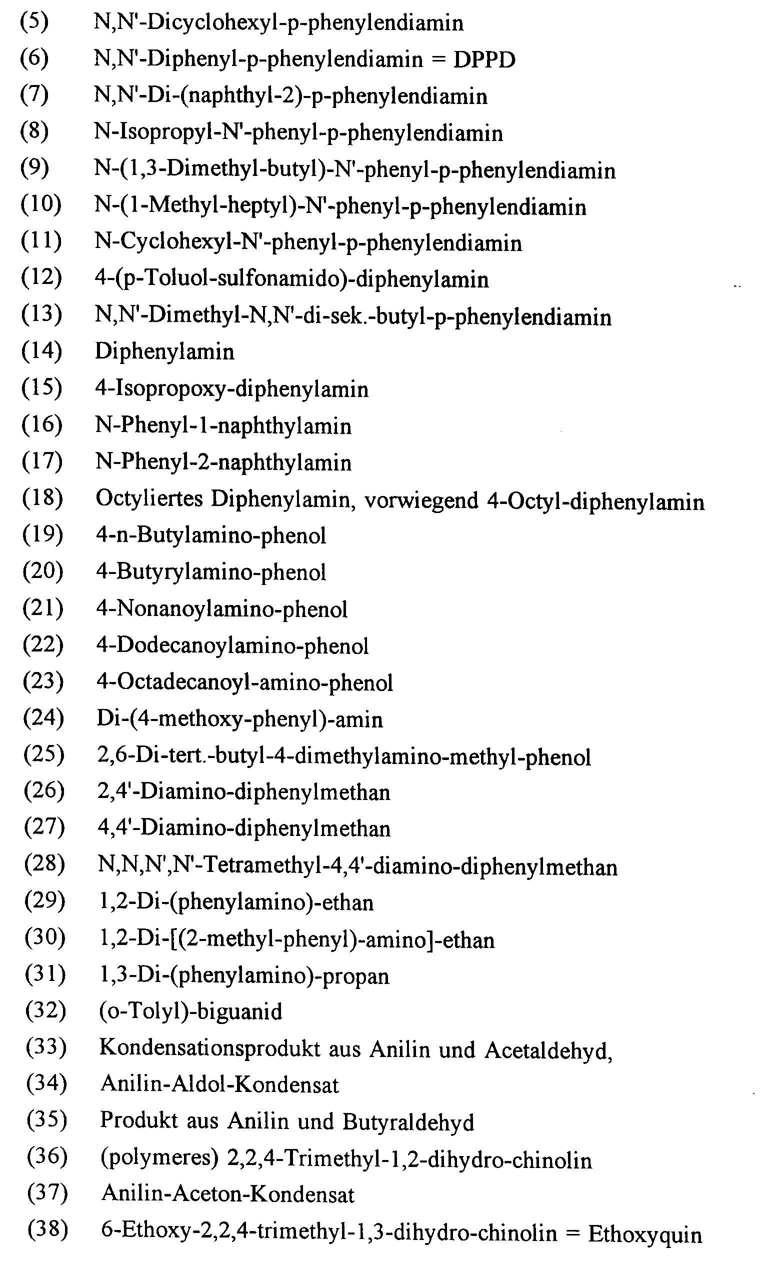 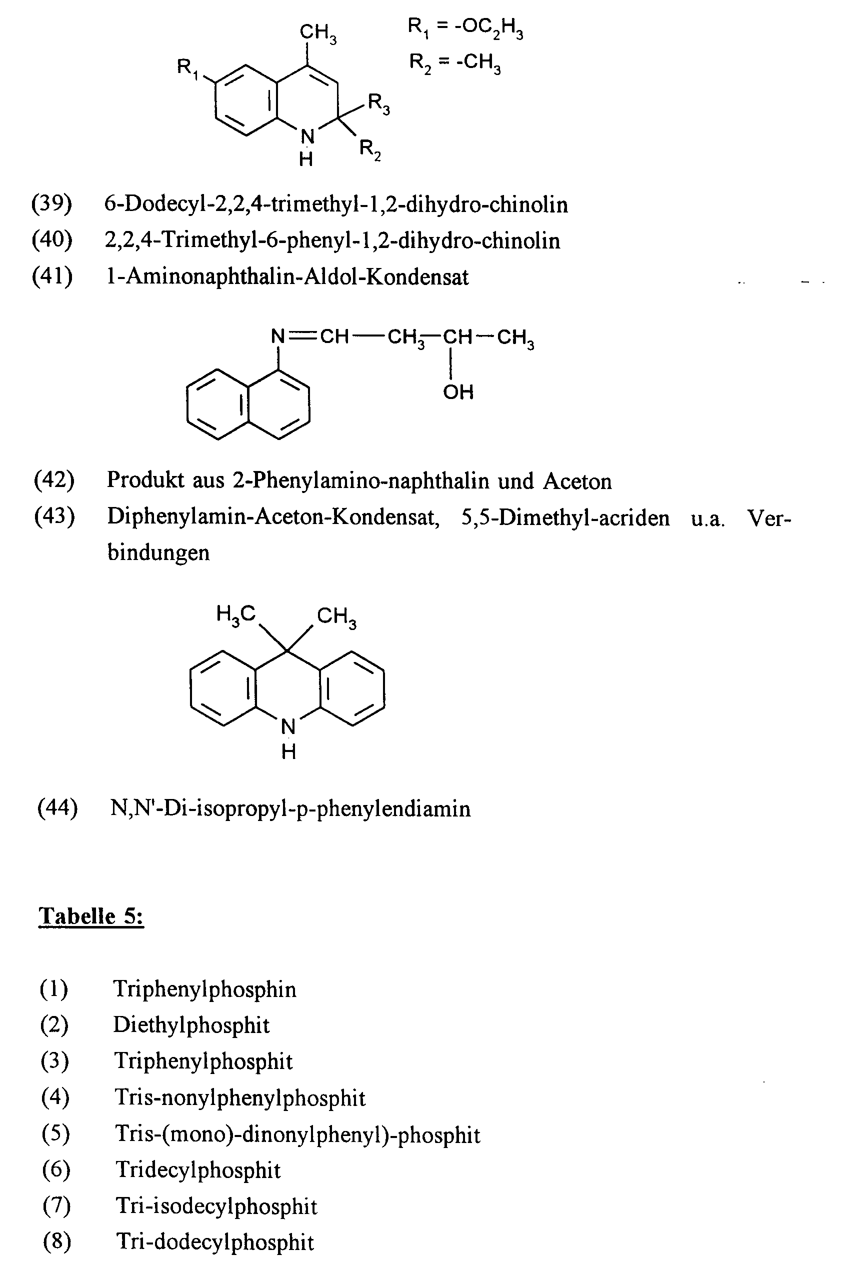 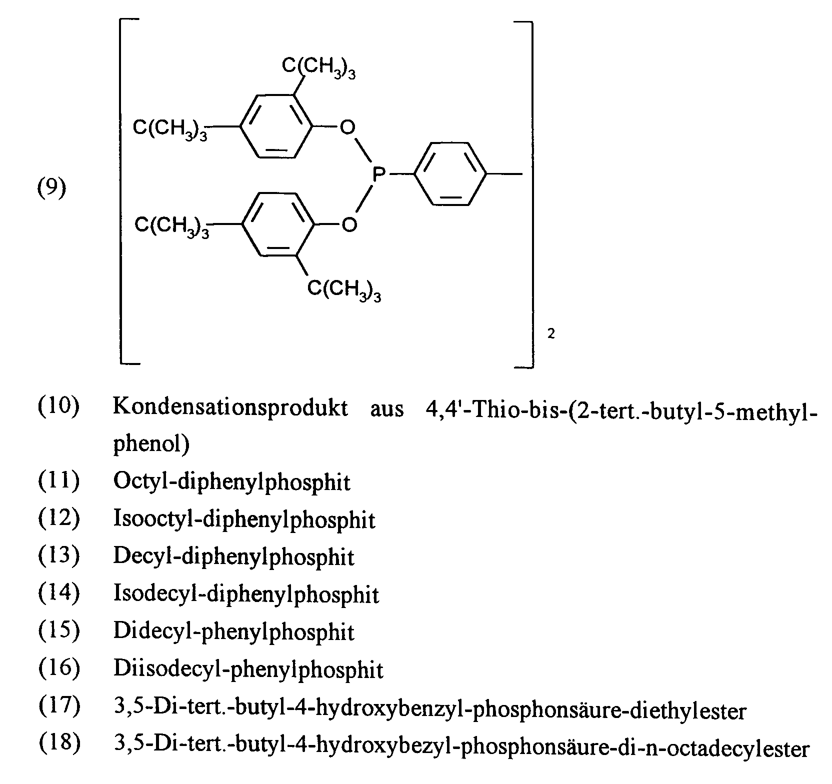 Zink-, Barium- und Calciumthiophosphate der Formel 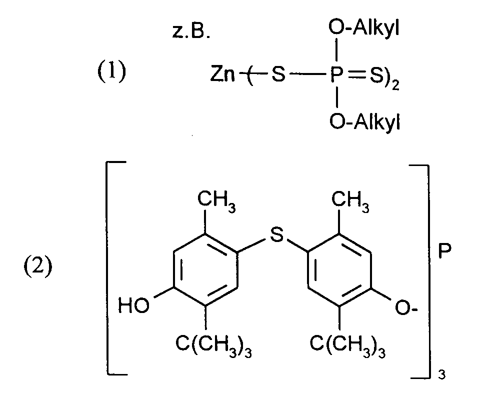 Borsäure der Formeln 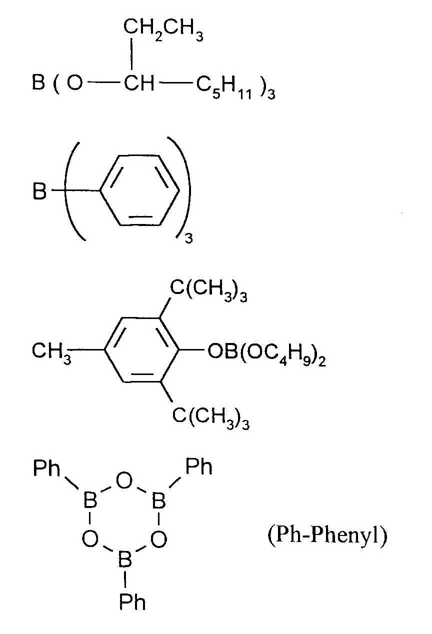 niedermolekulare Silicium-Verbindungen 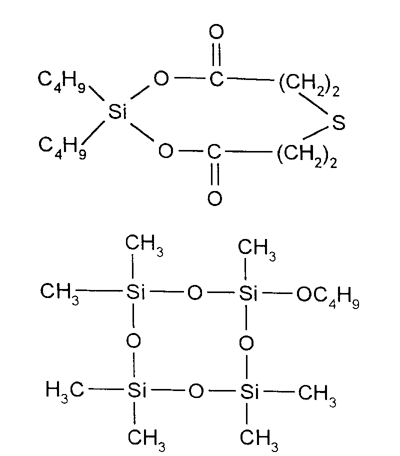 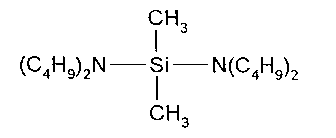 Organopolysiloxane der Formeln 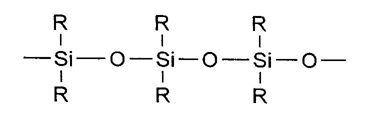 mit R = -CH₃, -Ph, -H oder 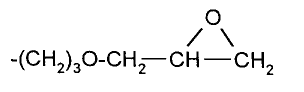 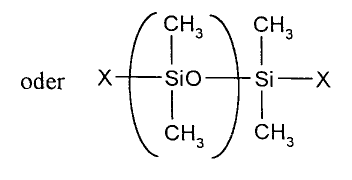 n = 1-10 mit
X = -CH₂O-(CH₂)₃-O(CH₂)₃-OH
-(CH₂)₄-OH
-OC₂H₅
sterisch gehinderte Amine auf Basis von 2,6-Tetramethylpiperidin.
